# EUROPÄISCHE PATENTANMELDUNG

(11) **EP 1 691 326 A1**
(43) Veröffentlichungstag der Anmeldung: **16.08.2006**
(21) Anmeldenummer: 05003081.6
(22) Anmeldetag: 14.02.2005
(51) Int. Cl.: G06Q 10/00

(54) **System zur Herstellung von Wartungsplänen**

(71) Anmelder: SIEMENS AKTIENGESELLSCHAFT, 80333 München (DE)
(72) Erfinder: Gross, Wolfgang, 91058 Erlangen (DE); Kerl, Bernd, 90431 Nürnberg (DE)

(57) **Zusammenfassung**

Die Erfindung betrifft ein System und ein Verfahren zur einfachen, aufwandsarmen und dynamischen Erstellung von Wartungsplänen für Maschinen und/oder Anlagen, insbesondere eines Automatisierungssystems der Fertigungs- und/oder Prozessautomatisierung. Hierbei bestehen die Maschinen und/oder Anlagen aus einer oder mehreren Komponenten (1), wobei die Komponenten (1) Wartungsinformationen (I) enthalten und wobei das System über eine Vorrichtung (2) zur Erzeugung eines Wartungsplans durch Kombination der Wartungsinformationen (I) der Komponenten (1) verfügt.

## Beschreibung

Die Erfindung betrifft ein System und ein Verfahren zur Erstellung von Wartungsplänen für Maschinen und/oder Anlagen.

Bei der Instandhaltung von Anlagen oder Maschinen im industriellen Bereich wird heutzutage die Wartung oft vorbeugend durchgeführt. Hierbei kommt in der Regel der zeitbasierte Ansatz zum Tragen, bei dem für die einzelnen Komponenten, aus denen die Anlage bzw. die Maschine besteht, entsprechende Wartungstätigkeiten zyklisch nach einem individuellen Zeitraster durchgeführt werden.

Eine fortschrittlichere Variante der Instandhaltung bzw. der Wartung von Anlagen und Maschinen ist die sogenannte leistungsbasierte Durchführung der vorbeugenden Instandhaltung. Dabei wird nicht ein festes Zeitraster für die Definition des Wartungszyklus herangezogen, sondern eine bestimmte erbrachte Leistung der Anlage bzw. der Maschine bzw. der jeweiligen Komponenten wird zur Festlegung des Wartungszyklus zugrunde gelegt. Beispielsweise wird eine Wartungsmaßnahme an einem Verstellantrieb nach Ableistung eines festgelegten Verstellweges durchgeführt.

Im Rahmen der Instandhaltung werden die durchzuführenden Wartungstätigkeiten für die Komponenten einer Anlage bzw. einer Maschine zu sogenannten Wartungsplänen zusammengefasst. Wartungspläne umfassen neben den vorgeschriebenen Wartungszyklen bzw. Leistungskriterien auch die Dokumentation für die Durchführung der Wartungsmaßnahmen, Anforderungen an das Wartungspersonal, benötigte Werkzeuge, Ersatzteile und gegebenenfalls weitere notwendige Hilfsmittel. Wartungspläne werden heutzutage vom Anlagenbauer erstellt. Der Anlagenbauer muss dabei die Charakteristika aller eingesetzten, von Komponentenherstellern gelieferten Komponenten, berücksichtigen und entsprechende Wartungsmaßnahmen vorsehen.

Hierbei entnimmt der Anlagenbauer für die Erstellung der Wartungspläne heutzutage die von den Komponentenherstellern vorgegebenen Wartungsinformationen für die Komponenten, welche normalerweise in der Dokumentation der Komponenten enthalten sind. Diese Wartungsinformationen kombiniert der Anlagenbauer manuell, beispielsweise gemäß der Konstruktion der Anlage zu Wartungsplänen. Für die Erstellung von Wartungsplänen müssen die Wartungsinformationen der Komponenten derart ausgewertet und zusammengefasst werden, dass sie einen einheitlichen und anlagenweit durchgängigen Inhalt besitzen. Wird eine neue Anlage gebaut und werden dabei neue Komponenten eingesetzt, so müssen die Wartungspläne der Anlage angepasst werden. Dabei entsteht speziell bei Sondermaschinenbauern und Anlagenbauern hoher Aufwand. Ebenso müssen die Wartungspläne nach einem Austausch von Komponenten beim Endkunden ausgetauscht bzw. angepasst werden.

Demgemäß müssen Wartungspläne heutzutage händisch und unter Zuhilfenahme der Dokumentation der einzelnen Komponenten der Anlage bzw. der Maschine erzeugt werden. Zudem müssen Wartungspläne für jede neue Anlage neu erstellt werden, was einen hohen Aufwand verursacht.

Die Aufgabe der vorliegenden Erfindung besteht daher darin, ein System und ein Verfahren anzugeben, mit dessen Hilfe eine einfache, aufwandsarme und dynamische Erstellung von Wartungsplänen ermöglicht wird.

Die Aufgabe wird gelöst durch ein System zur Erstellung von Wartungsplänen für Maschinen und/oder Anlagen, insbesondere eines Automatisierungssystems der Fertigungs- und/oder Prozessautomatisierung, wobei die Maschinen und/oder Anlagen aus einer oder mehreren Komponenten bestehen, wobei die Komponenten Wartungsinformationen enthalten und wobei das System über eine Vorrichtung zur Erzeugung eines Wartungsplans durch Kombination der Wartungsinformationen der Komponenten verfügt.

Die Aufgabe wird weiterhin gelöst durch ein Verfahren zur Erstellung von Wartungsplänen für Maschinen und/oder Anlagen, insbesondere eines Automatisierungssystem der Fertigungs- und/oder Prozessautomatisierung, bei dem die Maschinen und/oder Anlagen aus einer oder mehreren Komponenten bestehen, bei dem die Komponenten Wartungsinformationen enthalten und bei dem ein Wartungsplan durch Kombination der Wartungsinformationen der Komponenten erzeugt wird.

Der Erfindung liegt die Erkenntnis zugrunde, dass eine Erstellung von Wartungsplänen sich wesentlich einfacher durchführen lässt, wenn die für die Wartungspläne erforderlichen Anforderungen und Informationen für die Durchführung der Wartung nicht mehr in einer Dokumentation enthalten, sondern Bestandteil intelligenter Komponenten sind, aus denen die Anlagen bzw. Maschinen bestehen. Die Wartungsinformationen können hierbei z.B. Wartungsintervalle (Zeit- oder Leistungsbezogen), die Art der durchzuführenden Maßnahmen oder die Anleitung zur Durchführung der Maßnahmen sein. Ebenso können als Informationen Anforderungen an das Personal und notwendige Werkzeuge auf den Komponenten direkt hinterlegt sein. Ersatzteillisten, Workflows zur Schritt- für Schrittführung des Instandhalters sowie Gerätedokumentation können ebenfalls direkt von den Komponenten zur Verfügung gestellt werden. Diese Wartungsinformationen können in einer beliebigen Beschreibungssprache wie beispielsweise XML oder auch im ASCI Format erstellt werden. Weitere Beschreibungssprachen sind ebenfalls denkbar, obwohl hier nicht im Einzelnen aufgeführt.

Der Vorteil, wenn Informationen für die Durchführung der Wartung Bestandteil intelligenter Komponenten sind, liegt darin, dass die passenden Wartungsinformationen im Bedarfsfall schneller verfügbar sind. Hierdurch können nachvollziehbare und transparente Wartungspläne erstellt werden. Eine einfache Optimierbarkeit der Wartungspläne auf Basis der Wartungsanforderungen der einzelnen Komponenten wird ermöglicht. Desgleichen können Wartungspläne nach Umbauten oder Erweiterungen von Anlagen oder Maschinen auf einfache Weise an die neuen Gegebenheiten angepasst werden. Die Pläne liegen strukturiert und elektronisch vor und können in übergeordneten Instandhaltungssystemen wie beispielsweise Enterprise Asset Management Systemen weiter verwendet werden. Hierdurch ergeben sich auch anlagenübergreifende Vergleichsmöglichkeiten. Durch die Bereitstellung der Wartungsinformationen durch die Komponenten selbst wird eine leistungsbasierte bzw. zustandsbasierte Instandhaltung unterstützt.

Es ergeben sich hierdurch vor allem bei der Konzeption von Anlagen für die Industrie Einsparpotentiale bei der Erstellung der Wartungspläne. Des Weiteren werden die Wartungspläne nicht mehr von einzelnen Mitarbeitern aus der begleitenden Dokumentation selbst erstellt. Die Erstellung erfolgt vielmehr nachvollziehbar und auf eine objektive Weise, da die Informationen, die für die Wartung benötigt werden, direkt von den Komponenten mitgebracht werden bzw. den Komponenten zugeordnet sind. Hierdurch ergibt sich weiterhin eine einfache Vergleichsmöglichkeit bezüglich des Instandhaltungsaufwands der einzelnen Komponenten. Durch eine elektronische Speicherung und eine Verwendung der durch die Komponenten bereitgestellten Informationen kann ebenfalls ein Rückfluss dieser Informationen an den Anlagenbauer bzw. die Entwicklung erfolgen.

Die Wartungsinformationen der Komponenten können hierbei entweder direkt im Speicher der physikalischen Komponenten oder in einer mit der Komponente gelieferten Software enthalten sein.

Eine Automatisierungskomponente kann neben den Wartungsinformationen für sich selbst auch die Wartungsinformationen für mechanische Komponenten enthalten, mit denen sie verbunden ist. Beispielsweise kann ein Frequenzumrichter die Wartungsinformationen für sich selbst und für den Motor, den er treibt, enthalten.

Die Wartungsinformationen können im Entstehungsprozess von größeren Komponenten wachsen. Z.B. kann ein Pumpenhersteller einen Frequenzumrichter verwenden, der die Wartungsinformationen für sich selbst enthält. Der Pumpenhersteller ergänzt die Wartungsinformationen für Motor und Arbeitsmaschine. Die komplette Pumpe wird dann anschließend vom Anlagenbauer in einer Anlage eingesetzt. Die komplette Pumpe als Komponente enthält dann die im Rahmen ihrer Entstehung zu verschiedenen Zeitpunkten zusammengeführten Wartungsinformationen.

Die Wartungsinformationen werden von den Komponenten z.B. über in den Komponenten enthaltene Web-Server/HTML-Seiten, über TCP/IP, Profinet oder über andere Übertragungswege zur Verfügung gestellt.

Über ein Wartungstool bzw. eine Vorrichtung zur Erzeugung eines Wartungsplans können die Wartungsinformationen der einzelnen Komponenten zu einem Wartungsplan kombiniert werden. Die Vorrichtung zur Erzeugung eines Wartungsplans bzw. das Wartungstool verwendet hierzu z.B. die in einer Steuerungsprojektierung enthaltenen hierarchischen Informationen (technologische Hierarchie, Komponentenhierarchie), um die Wartungsinformationen gemäß der Konstruktion der Maschine bzw. der Anlage zu kombinieren. Alternativ kann das Wartungstool auch die in Layouts bzw. Schaltplänen enthaltenen Informationen verwenden, um aus den Wartungsinformationen der Komponenten den Wartungsplan zu erstellen. Das Wartungstool ermittelt aus den Informationen der Komponenten und den Daten der Steuerungsprojektierung die günstigsten Wartungszyklen und kombiniert dabei möglichst viele Einzelaufgaben zu Aufgabenblöcken.

Das Wartungstool erstellt anhand der in den Komponenten enthaltenen Anforderungen an Wartungspersonal und Werkzeuge außerdem Ausbildungspläne und Werkzeuglisten. Dazu werden neben den verschiedenen Komponententypen ebenfalls Mengen der verbauten Komponenten berücksichtigt. Die Anforderungen werden vom Wartungstool zusammengefasst und optimiert.

Mit dem Wartungstool können Wartungsinformationen für Komponenten vom Anwender seinen Anforderungen angepasst werden. Die durchgeführten Änderungen kann das Wartungstool auf Wunsch in allen in der Anlage vorhandenen gleichen Komponenten übernehmen. Die Änderungen können hierbei vom Wartungstool protokolliert werden. Das Wartungstool verwaltet die Wartungspläne eindeutig und nachvollziehbar.

Mit Hilfe des erfindungsgemäßen Systems bzw. des Verfahrens können neue Möglichkeiten im Rahmen der Bereitstellung von Informationen für Instandhaltungen realisiert werden. Beispielsweise können Wartungsinformationen über das Web bereitgestellt werden. Durch die Möglichkeit, dass Wartungsinformationen, die einzelnen Komponenten, welche später zu größeren komplexen Anlagenteilen zusammengefügt werden, zu unterschiedlichen Zeitpunkten beigefügt und später zusammengefügt werden, wird eine Vervollständigung der gesamten Engineeringkette in Bezug auf die notwendigen Instandhaltungsinformationen erreicht.

Die Möglichkeit, eine komponentenbezogene Wartung mit Hilfe des Systems und Verfahrens durchzuführen, unterstützt eine möglichst passgenaue Durchführung der notwendigen Instandhaltungsmaßnahmen. Hierdurch wird eine Reduktion der Lifecyclekosten erzielt. Unterstützt wird die Vorgehensweise der Bereitstellung der Wartungsinformationen durch die Komponenten selbst durch die Tatsache, dass Automatisierungskomponenten zunehmend intelligenter und kommunikationsfähiger werden. Mit dem Ethernet in der Feldebene steht außerdem ein leistungsfähiges Kommunikationsmedium zur Verfügung.

Besonders vorteilhaft ist, dass die Wartungsinformationen von den Komponenten auch Online zur Verfügung gestellt werden können. Hierdurch kann beispielsweise ein nicht vor Ort anwesender Anlagenbauer in seinen Unterlagen die Wartungsinformationen zu bestimmten Komponenten aktualisieren. Diese Informationen können dann über das Web den beteiligten Komponenten einer Anlage zugewiesen werden. Mit Hilfe des Wartungstools können dann diese aktualisierten Informationen zu einem Wartungsplan zusammengefügt werden bzw. ein Wartungsplan kann auf Basis dieser Informationen stets aktuell gehalten werden.

Eine dynamische Anpassung der notwendigen Instandhaltungsmaßnahmen wird mit Hilfe des Systems ermöglicht. Auf diese Weise können außerdem Informationen aus der Steuerungsprojektierung für die Erstellung von Wartungsplänen verwendet werden. Ein Update entsprechender Informationen durch eine Rückkopplung aus der Anlage an den nicht vor Ort anwesenden Anlagenbauer bzw. auch an die Projektierer wird durch das System ermöglicht.

Insgesamt wird eine automatisierte Erstellung und Optimierung von Anlagen-Wartungsplänen durch das Wartungstool ermöglicht. Dabei werden Wartungsintervalle, die Art der durchzuführenden Maßnahmen, eine Anleitung zur Durchführung der Maßnahmen sowie Anforderungen an Personal und Werkzeugen und die notwendigen Arbeitsschritte für die Durchführung der Instandhaltungsaufgabe berücksichtigt. Dadurch, dass die Komponenten ihre Wartungsinformationen direkt mitbringen und dem Wartungstool zur Verfügung stellen, wird ein Update von Wartungsplänen nach einem Komponentenaustausch oder einer Anlagenerweiterung auf Knopfdruck möglich.

Als Komponenten, die ihre Wartungsinformationen mitbringen bzw. zur Verfügung stellen sind hierbei alle Anlagenkomponenten, die im Automatisierungsumfeld zum Einsatz kommen denkbar. Bei den Komponenten kann es sich beispielsweise um Feldgeräte wie Aktoren und Sensoren oder auch um Antriebe, Pumpen oder komplexe Maschinen handeln. Ebenso sind Einzelteile oder komplexere Zusammenschlüsse von Transport- oder Leitungssystemen als Komponenten im Rahmen des erfindungsgemäßen Systems zu betrachten.

Weitere vorteilhafte Ausgestaltungen der Erfindung sind in den Unteransprüchen angegeben.

Im Folgenden wird die Erfindung anhand der in den Figuren dargestellten Ausführungsbeispiele näher beschrieben und erläutert. Es zeigen:
- FIG 1: eine schematische Darstellung des Systems zur Erstellung von Wartungsplänen mit Speicherung der Wartungsinformationen in den Komponenten,
- FIG 2: eine schematische Darstellung des Systems zur Erstellung von Wartungsplänen mit Wartungsinformationen der Komponenten in externen Datensätzen,
- FIG 3: eine schematische Darstellung des Systems, bei dem Wartungsinformationen der Komponententypen per Internet zur Verfügung gestellt werden.

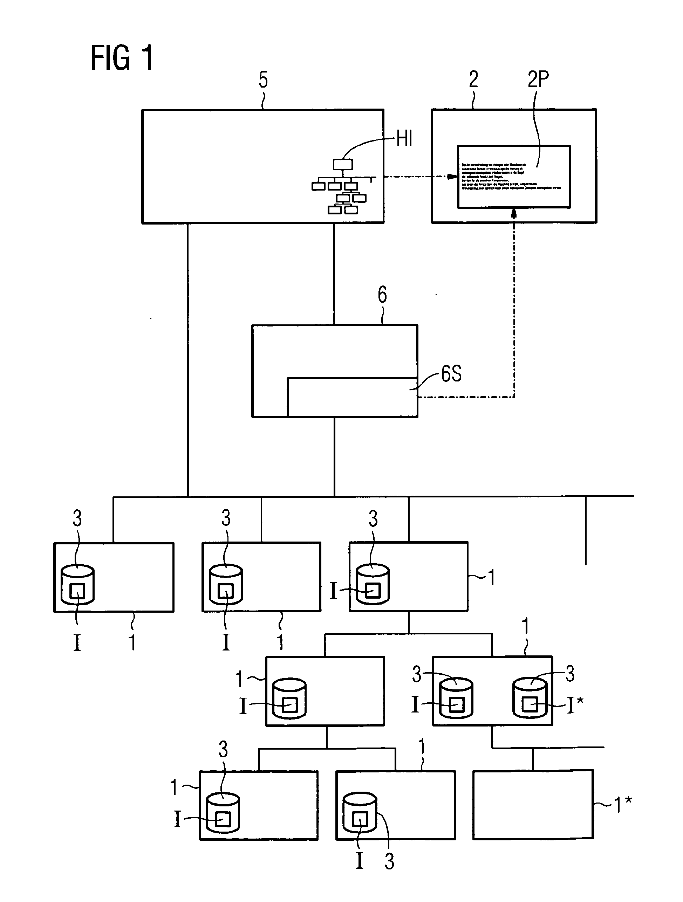

FIG 1 zeigt das System zur Erstellung von Wartungsplänen für Maschinen oder Anlagen. Hierbei besteht das System aus mehreren Komponenten 1. Die Komponenten 1 enthalten Wartungsinformationen I, die strukturiert vorliegen und zur jeweiligen Komponente gehören. Die Wartungsinformationen I werden über eine Vorrichtung 2 zur Erzeugung eines Wartungsplans 2P kombiniert. Hierbei werden die Wartungsinformationen I der einzelnen Komponenten 1 durch die Vorrichtung 2 zur Erzeugung eines Wartungsplans 2P zusammengefügt. Komponenten 1 können neben ihrer eigenen Wartungsinformation I auch Wartungsinformationen I* jeweils ihnen untergelagerter Komponenten 1* enthalten. Hierbei bilden die Komponenten 1 die Stellvertreter im System für die weiteren untergelagerten Komponenten 1*.

Die Wartungsinformationen I werden über eine Steuerung über einen Server 6, die über einen Server 6S verfügt, an das Wartungstool bzw. die Vorrichtung 2 zur Erzeugung eines Wartungsplans weitergeleitet. Die Wartungsinformationen I werden auf Basis der hierarchischen Informationen HI bzw. der Anlagenstruktur, welche die Komponentenstruktur abbildet, durch die Vorrichtung 2 zur Erzeugung eines Wartungsplans 2P kombiniert. Die Bereitstellung der hierarchischen Informationen HI kann beispielsweise durch eine Projektiervorrichtung 5 erfolgen. Hierbei kann es sich beispielsweise um ein Engineering-System handeln.

Im dargestellten Ausführungsbeispiel sind die Wartungsinformationen I im Speicher 3 der Komponenten 1 enthalten. Sie können Online über die Steuerung 6 zur Verfügung gestellt werden. Dies kann beispielsweise auch über Web erfolgen. Alternativ können die Wartungsinformationen I auch aus der Projektiervorrichtung 5 bzw. dem Engineering-System ausgelesen und zur Verfügung gestellt werden. Die Projektierungsinformationen wie Komponentenhierarchie werden vom Engineeringsystem zur Verfügung gestellt. Das Wartungstool 2 kombiniert die Wartungsinformationen I der Komponenten 1 und die Engineeringinformation und generiert daraus einen Wartungsplan 2P.

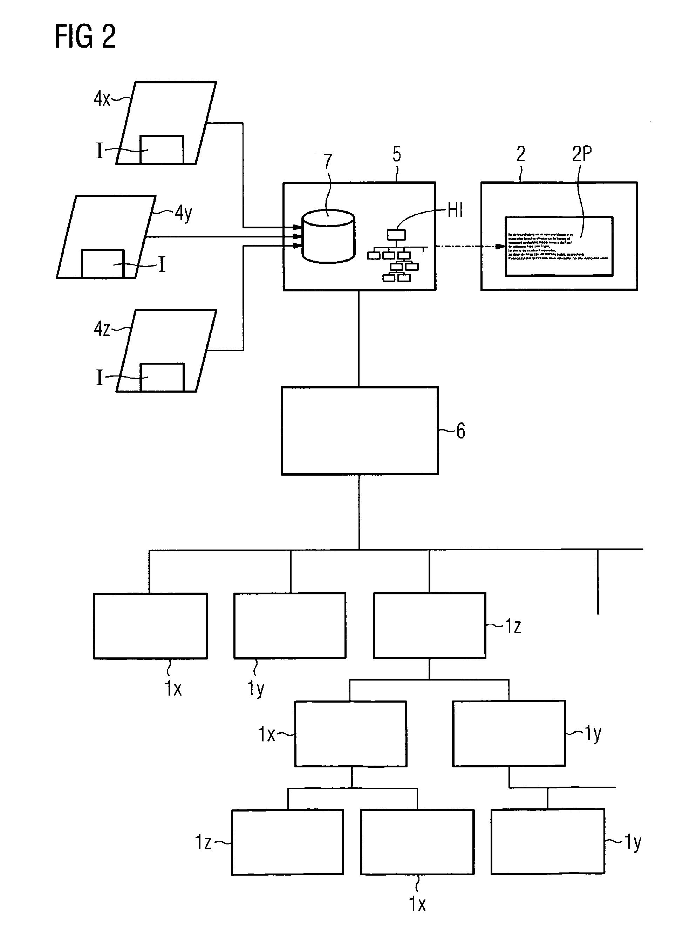

FIG 2 zeigt ein System zur Erstellung von Wartungsplänen, bei dem die Wartungsinformationen I in strukturierter Form in den Komponenten 1 zugehörigen Softwaretools enthalten sind. Beispielsweise werden diese den Komponenten 1x, 1y, 1z zugeordneten Softwaretools oder Pakete 4x, 4y, 4z im Engineeringsystem bzw. der Projektiervorrichtung 5 in einer Datenbank 7 hinterlegt. Die hierarchische Struktur, über welche die Wartungsinformationen I der einzelnen Anlagenkomponenten 1x, 1y, 1z durch das Wartungstool bzw. die Vorrichtung 2 zur Erzeugung eines Wartungsplans 2P kombiniert werden, sind beispielsweise ebenfalls im Engineeringsystem bzw. der Projektiervorrichtung 5 hinterlegt. In dem dargestellten Ausführungsbeispiel werden die Wartungsinformationen I gemeinsam mit den Engineeringdaten, welche die Komponentenhierarchie abbilden, dem Wartungstool bzw. der Vorrichtung 2 zur Erzeugung des Wartungsplans 2P zur Verfügung gestellt. Die Wartungsinformationen I können hierbei als eigene Softwarekomponenten 4x, 4y, 4z oder im Rahmen der Komponentenbeschreibungen innerhalb des Enineeringsystems zur Verfügung gestellt werden. Zur Speicherung der den Komponenten 1 zugeordneten Software 4 ist im Engineeringsystem eine lokale Datenbank 7 vorgesehen.

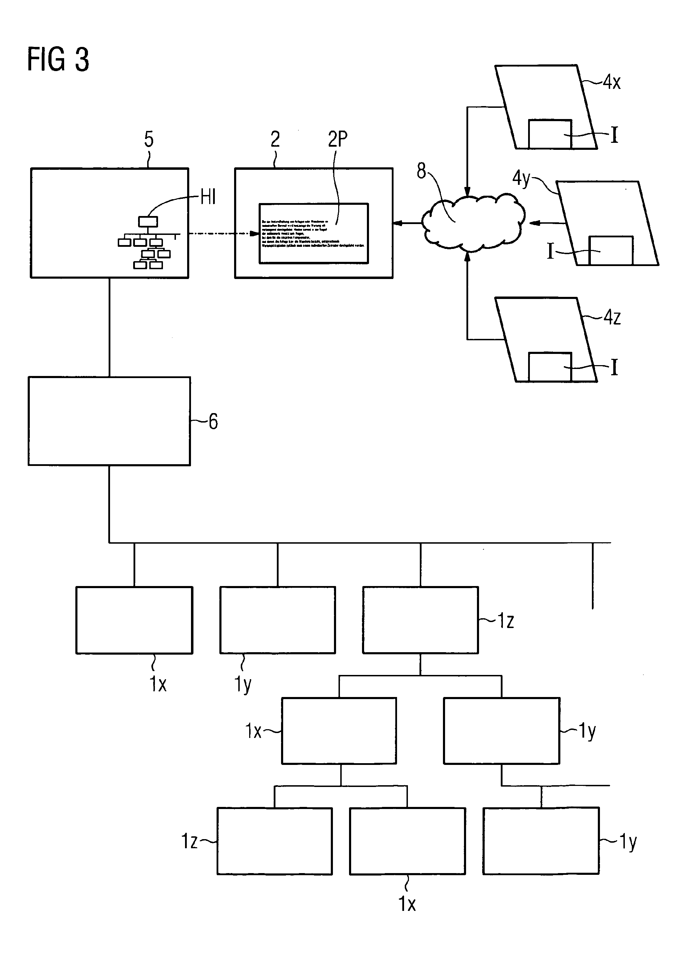

FIG 3 zeigt ein weiteres Ausführungsbeispiel, bei dem die den Komponenten 1 zugeordnete Software 4x, 4y, 4z welche die strukturierten Wartungsinformationen der Komponententypen 1x, 1y, 1z enthält, über ein Internet 8 an das Wartungstool bzw. die Vorrichtung 2 zur Erzeugung eines Wartungsplans 2p bereitgestellt wird. In diesem Fall können beispielsweise die Wartungsinformationen I vom Hersteller der Komponenten 1 gepflegt und dann per Internet für die Nutzung in der Vorrichtung 2 zur Erstellung eines Wartungsplans bereitgestellt werden. Die hierarchische Struktur HI der Anlage bzw. der Maschine erhält die Vorrichtung 2 zur Erzeugung eines Wartungsplans 2P über die Projektiervorrichtung 5, beispielsweise vom Engineeringsystem. Über die im Engineering bzw. der Projektiervorrichtung 5 hinterlegten Informationen, wie beispielsweise Hersteller, Komponententyp und Bestellnummer ermittelt das Wartungstool 2 die Komponententypen 1x, 1y, 1z. Das Wartungstool 2 nimmt beispielsweise Kontakt zu den Homepages der entsprechenden Komponentenlieferanten auf und sucht nach den zu den Komponenten 1x, 1y, 1z zugehörigen Wartungsinformationen I, welche in Form von zugeordneter Software 4x, 4y, 4z zur Verfügung gestellt werden. Anschließend werden von der Vorrichtung 2 zur Erzeugung eines Wartungsplans 2P bzw. dem Wartungstool die Wartungsinformationen I herunter geladen. Sie stehen dann für die Erstellung des Wartungsplans 2P zur Verfügung.

## Patentansprüche

1. System zur Erstellung von Wartungsplänen für Maschinen und/oder Anlagen, insbesondere eines Automatisierungssystems der Fertigungs- und/oder Prozessautomatisierung, wobei die Maschinen und/oder Anlagen aus einer oder mehreren Komponenten (1) bestehen, wobei die Komponenten (1) Wartungsinformationen (I) enthalten und wobei das System über eine Vorrichtung (2) zur Erzeugung eines Wartungsplans durch Kombination der Wartungsinformationen (I) der Komponenten (1) verfügt.

2. System nach Anspruch 1, wobei die Komponenten (1) einen Speicher (3) zur direkten Speicherung der Wartungsinformationen (I) aufweisen.

3. System nach einem der Ansprüche 1 oder 2, wobei die Komponenten (1) als Automatisierungskomponenten ausgebildet sind und zur Speicherung ihrer eigenen Wartungsinformationen (I) sowie zur Speicherung von Wartungsinformationen (I*) weiterer Komponenten (1*) vorgesehen sind.

4. System nach Anspruch 3, wobei die weiteren Komponenten (I*) als mechanische Komponenten ausgebildet sind und den die Wartungsinformationen (I*) enthaltenden Automatisierungskomponenten (1) unterlagert sind.

5. System nach Anspruch 1, wobei eine, die Wartungsinformationen (I) der Komponenten (1) enthaltende, den Komponenten (1) zugeordnete Software (4) vorgesehen ist.

6. System nach Anspruch 5, wobei eine lokale Datenbank (7) zur komponentenspezifischen Speicherung der die Wartungsinformationen (I) enthaltenden Software (4) vorgesehen ist.

7. System nach Anspruch 5, wobei die die Wartungsinformationen (I) enthaltende Software (4) zur Aktualisierung durch einen Komponentenhersteller vorgesehen ist, wobei eine Bereitstellung der Wartungsinformationen (I) für die Vorrichtung (2) zur Erzeugung des Wartungsplans (2P) über ein Internet vorgesehen ist.

8. System nach einem der vorhergehenden Ansprüche, wobei eine Projektiervorrichtung (5) zur Bereitstellung von hierarchischen Informationen zu den Komponenten (1) vorgesehen ist, wobei die hierarchischen Informationen (HI) als Basis für die Kombination der Wartungsinformationen (I) durch die Vorrichtung (2) zur Erzeugung des Wartungsplans vorgesehen sind.

9. System nach einem der Ansprüche 1 bis 7, wobei Schaltpläne als Basis für die Kombination der Wartungsinformationen (I) durch die Vorrichtung (2) zur Erzeugung des Wartungsplans vorgesehen sind.

10. System nach einem der vorhergehenden Ansprüche, wobei die Vorrichtung (2) zur Erzeugung des Wartungsplans zur Ermittlung von Wartungszyklen und/oder zur Kombination von Einzelaufgaben zu Aufgabenblöcken vorgesehen ist.

11. System nach einem der vorhergehenden Ansprüche, wobei die Vorrichtung (2) zur Erzeugung des Wartungsplans derart ausgebildet ist, dass Wartungsinformationen (I) für die Komponenten (1) durch einen Anwender des Systems änderbar sind.

12. System nach Anspruch 11, wobei die Vorrichtung (2) zur Erzeugung des Wartungsplans derart ausgebildet ist, dass geänderte Wartungsinformationen (I) für gleiche Komponenten übernehmbar sind.

13. Verfahren zur Erstellung von Wartungsplänen für Maschinen und/oder Anlagen, insbesondere eines Automatisierungssystems der Fertigungs- und/oder Prozessautomatisierung, bei dem die Maschinen und/oder Anlagen aus einer oder mehreren Komponenten (1) bestehen, bei dem die Komponenten (1) Wartungsinformationen (I) enthalten und bei dem ein Wartungsplan durch Kombination der Wartungsinformationen (I) der Komponenten (1) erzeugt wird.

14. Verfahren nach Anspruch 13, bei dem die Wartungsinformationen (I) direkt in den Komponenten (1) gespeichert werden.

15. Verfahren nach einem der Ansprüche 13 oder 14, bei dem die Komponenten (1) Automatisierungskomponenten sind und ihre eigenen Wartungsinformationen (I) sowie die Wartungsinformationen (I*) weiterer Komponenten (1*) speichern.

16. Verfahren nach Anspruch 15, bei dem die weiteren Komponenten (I*) mechanische Komponenten sind und den die Wartungsinformationen (I*) enthaltenden Automatisierungskomponenten (1) unterlagert sind.

17. Verfahren nach Anspruch 13, bei dem den Komponenten (1) eine, die Wartungsinformationen (I) der Komponenten (1) enthaltende, Software (4) zugeordnet ist.

18. Verfahren nach Anspruch 17, bei dem die die Wartungsinformationen (I) enthaltende Software (4) komponentenspezifisch in einer lokalen Datenbank gespeichert ist.

19. Verfahren nach Anspruch 17, bei dem die die Wartungsinformationen (I) enthaltende Software (4) durch einen Komponentenhersteller aktualisiert wird, wobei die Wartungsinformationen (I) zur Erzeugung des Wartungsplans über ein Internet bereitgestellt werden.

20. Verfahren nach einem der Ansprüche 13 bis 19, bei dem hierarchische Informationen zu den Komponenten (1) durch eine Projektiervorrichtung (5) bereitgestellt werden, wobei die hierarchischen Informationen als Basis für die Kombination der Wartungsinformationen (I) zur Erzeugung des Wartungsplans dienen.

21. Verfahren nach einem der Ansprüche 13 bis 19, bei dem Schaltpläne als Basis für die Kombination der Wartungsinformationen (I) durch die Vorrichtung (2) zur Erzeugung des Wartungsplans dienen.

22. Verfahren nach einem der Ansprüche 13 bis 21, bei dem bei Erzeugung des Wartungsplans Wartungszyklen ermittelt werden und/oder Einzelaufgaben zu Aufgabenblöcken kombiniert werden.

23. Verfahren nach einem der Ansprüche 13 bis 22, bei dem Wartungsinformationen (I) für die Komponenten (1) durch einen Anwender des Systems geändert werden.

24. Verfahren nach Anspruch 23, bei dem geänderte Wartungsinformationen (I) für gleiche Komponenten übernommen werden.
